# EUROPEAN PATENT APPLICATION

(11) **EP 4 140 873 A1**
(43) Date of publication of application: **01.03.2023**
(21) Application number: 22189149.2
(22) Date of filing: 05.08.2022
(51) Int. Cl.: B63H 9/08, F16C 29/06, F16C 33/37

(54) **SLIDING DEVICE**

(30) Priority: 31.08.2021 ES 202131735 U
(71) Applicant: Win, Thiha Kyaw Thi, 46005 Valencia (ES)
(72) Inventor: Win, Thiha Kyaw Thi, 46005 Valencia (ES)
(74) Representative: Sahuquillo Huerta, Jesús

(57) **Abstract**

A sliding device comprising a track (200) with a groove (201) in each of its sides; and a car (100) slidable along said track (200) comprising a body having side portions (100a, 100b) in opposition to said track grooves (201) and spaced therefrom, each of said side portions (100a, 100b) having a sliding race with an open engagement portion and a recirculating return portion, and a comprising a sliding mechanism (300) in the form of a belt circulating around said open engagement portion and said recirculating portion, said sliding mechanism engaged between said race open engagement portion, and said track groove (201); the sliding mechanism (300) consists of a plurality of rollers (301) or balls (303) wherein each roller (301) or ball (303) is attached to the anterior and posterior roller (301) or ball (303) through a floating cage (302) in such a way that forms a continuous closed loop that is arranged to recirculate inside the side portions (100a, 100b) of the car (100).

## Description

### Technical field

This invention relates to a sliding device which can be used in which is a device generally known in the art as comprising a track mounted on a support and a car slidably mounted on the track. More particularly, the present invention relates to a sliding device unit in which a slider is forced to move lengthwise along a track rail.

### Prior art

Travelers are employed on sailing vessels at various locations to assist in the adjustment of sails. Typical locations include mainsheet systems, adjustable genoa lead systems, adjustable spinnaker poles, and mainsail systems using full length battens. These systems are shown and described in current catalogues available from Harken, Inc., Pewaukee, Wisconsin, and on its corresponding website.

In general, a traveler comprises an elongate track and a car slidably mounted for movement along the length of the track. The car is restrained for movement away from the track, usually by overlapping portions in the case of a simple slider or by bearings which engage corresponding grooves in each side of the track. The top of the car usually carries a fitting, such as a strap, to enable attachment of the car to another object, such as a block.

U.S. patent no. 4,144,830 discloses a traveler with recirculating ball bearings carried by the car. The ball bearings are installed in an oval cylindrical passage on each side of the car, with the passage being inwardly open to expose a line of balls. The track has V shaped grooves on both sides of the track, and the balls of the car ride along the surfaces of the grooves and prevent upward or downward disengagement of the car from the track.

While the use of recirculating ball bearings provides low friction performance over a variety of conditions, there are several drawbacks in using systems of this nature. Since the exposed line of ball bearings is retained only by virtue of contact with walls of the groove in the track, the car cannot be removed from the track without the bearings falling out and scattering. Installation of a car onto a track presents related problems, with the bearings required to be individually and carefully installed. Presently, the only solution to these problems is to provide a short length of metal or plastic track which is brought into abutting relation with the main track. The car may only be installed and removed from the main track grooves with the aid of this track segment in a tedious procedure that often goes awry, resulting in a loss of bearings.

The problem is additionally compounded when a traveler system is used in connection with a full batten mainsail. In such application, a track is mounted along the length of the back of the mast. The sail has full length battens which extend generally horizontally on the sail. The forward end of each batten carries a fitting which is attached to a car mounted on the track. These systems provide support for the sail and facilitate raising and lowering of the sail.

A difficulty arises if there is a need to remove the sail from the mast. The cars cannot be slid off the bottom end of the track because the bearings will fall out. Therefore, it is necessary to use the special tool described above, or it becomes necessary to disengage each of the cars at their linkage to the battens, either of which is a time consuming and tedious process, particularly on a boat that may be rocking or otherwise unsteady.

Furthermore, in all cases where recirculating ball bearings are employed, it is necessary to secure caps at each end of the track to prevent the car from accidentally sliding off. If the end caps should break or become disengaged, especially while sailing, serious problems can occur.

In view of the above, there is a long felt and unresolved need in the art to provide a traveler car having a conventional recirculating ball bearing system together with a feature to enable the bearings to be self-contained in the car while still providing full bearing contact with the groove in the track. Such a feature would enable installation and removal of the car on the track without resort to special tools or without concern about loss of the bearings.

The document EP1069042B1 discloses a solution for the above-mentioned problems. This document discloses (see FIG.1) a track (4) having a pair of sides with a substantially V-shaped groove (6) in each of said sides; a car (2,100,150) slidable along said track (4) comprising a body having side portions in opposition to said track grooves (6) and spaced therefrom, each of said side portions comprising a ball bearing race (20) having an open engagement portion (22) and a recirculating return portion (24), a plurality of ball bearings (16) circulating around said open engagement portion (22) and said recirculating portion (24), said ball bearings (16) engaged between said race open engagement portion (22), and said track V-shaped groove (6); and a pair of bearing retaining clips (8), one each of said retaining clips (8) retaining said bearings (16) in each of said race open engagement portions (22) said retaining clip (8) ends removably secured to said car, said retaining clip (8) movably received by said track V-shaped groove, wherein said car (2) has two end walls (10), said race open portions (22) extending between said end walls characterized in that said end walls (10) and said car (2) form one unique element and said end walls (10) each have a guide slot (15) proximate said race open portion (22) for guiding said retaining clip (8), said retaining clip (8) passing through said guide slots (15), and said clip (8) having ends removably attached to said end walls (10).

However, the different travelers found in the prior art are essentially based on ball bearings that frequently have malfunctions and need maintenance to avoid it. For example, the document EP1095848A2 (commercially known as HARKEN CRX car), GB2294736A, US5123754A, US4941197A, US6109789A or US4702622A. In addition, all the travelers known in the art are linear displacement devices. Therefore, in addition it should be needed a traveler that can be used on straight, curved, or non-regular geometry paths.

### Summary of Invention

The present invention is a sliding device that is useful for applications in which a sliding member is mounted on a relatively fixed track for movement along a straight, curved, or non-regular track, and in which the sliding member carries a line of exposed rollers or balls recirculating in a sliding mechanism with the track. The invention is particularly suitable for travelers having a car and recirculating rollers in a sliding mechanism in both sides of the car which bear on grooves in the side of the track. The present invention solves the drawbacks of the prior art according with the traveler of claim 1.

More particularly, the present invention comprises a roller slidable mechanism comprising a plurality of balls or rollers attached to a plurality of floating cages configuring a recirculating and sliding mechanism inside the car. This solution is simple and stronger that the ball bearings of the prior art and requires less maintenance.

Throughout the description and the claims, the word "comprises", and variants thereof do not seek to exclude other technical features, additions, components, or steps. For those skilled in the art, other objects, advantages, and features of the invention will be inferred in part from the description and in part from the practice of the invention. The following examples and drawings are provided by way of illustration and do not seek to limit the present invention. Furthermore, the present invention covers all the possible combinations of particular and preferred embodiments herein indicated.

### Brief Description of the Drawings

To complement the description that is being made and for the purpose of helping to better understand the features of the invention, a set of drawings is attached as an integral part of said description in which the following is depicted in a non-limiting illustrative character:
Figure 1 is an end view of the traveler according with the prior art.
Figure 2 is a s a perspective bottom view of the car that forms part of the traveler of the prior art.
Figure 3 is a perspective view of an embodiment of the traveler according with the present invention.
Figure 4 is a perspective isolated view of a first embodiment of the sliding mechanism inside the car.
Figure 5 is a perspective isolated view of a second embodiment of the sliding mechanism.
Figure 6 is a perspective isolated view of a third embodiment of the sliding mechanism.

### Preferred embodiment of the invention

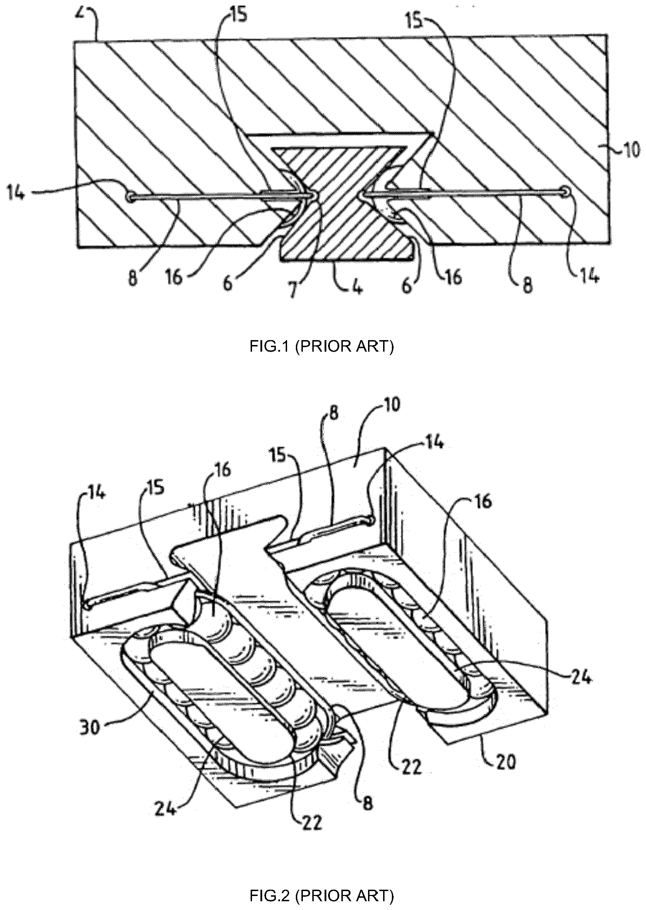

Fig. 1 shows an end view of a traveler according with the prior art, with car 2 slidably held on track 4. Endwall 10 has bearing retaining clips 8 removably secured in locking holes 14. Endwall 10 further has guide slot 15 for passing and guiding clips 8. Car 2 has a plurality of ball bearings 16 in bearing engagement with track V-shaped grooves 6. When car 2 is removed from track 4, retaining clip 8 holds balls 16 in place. Retaining clips 8 pass freely through track slot 7, preferably without contact with track 4.

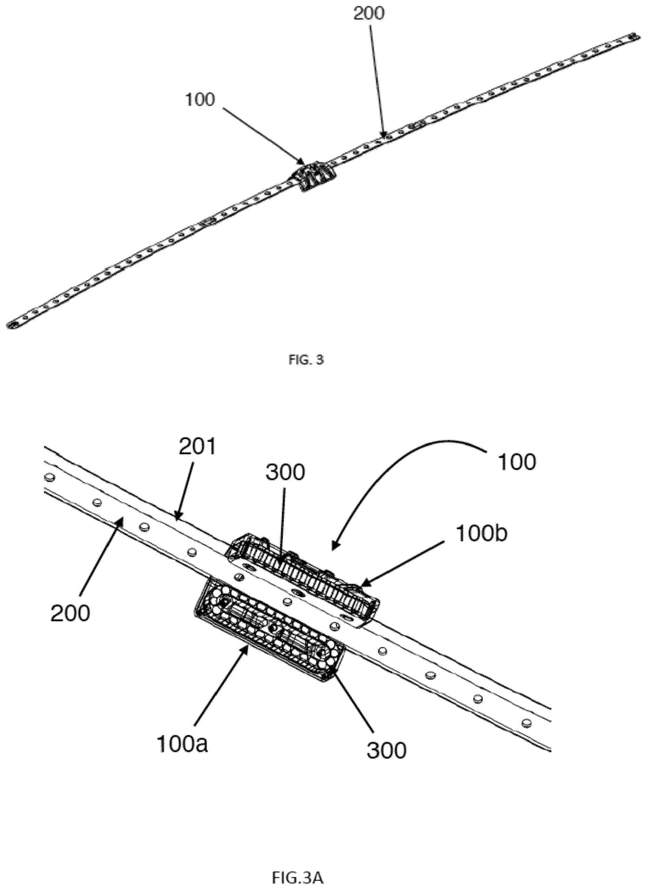

Fig 2 is a perspective view of the bottom and end of car 2 disengaged from track 4. Ball bearings 16 rotate about races 20, which comprise straight open portion 22 and a continuous recirculating portion 24. Race recirculating portion 24 is preferably open to the bottom of car 2 for purposes of bearing 16 lubrication, inspection, and maintenance. It is noted that race recirculating portion 24 and open portion 22 are illustrated having a generally oval shape; other shapes may be comprised, however, as particular applications may call for. Further, it is likewise noted that race open portion 22 need not be straight, other embodiments may comprise race open portions that are curved, for example. As illustrated in Fig. 3, balls 16 are retained in race straight open portion 22 when car 2 is disengaged from the track by retaining clip 8. Car end wall 10 has locking holes 14 for receiving retaining clip 8 ends to thereby removably secure clip 8 in place. Clip 8 is guided by passing through car end wall guide slots 15 for support.

Fig.3 is a perspective view of the mechanism according with the invention. The car 100 is slidably held on track 200. In this case, as it is better shown in detail in Fig.3a a sliding mechanism 300 is mounted on two cages of the car (100a, 100b) secured by three points (101, 102, 103) that act as a tensor of the sliding mechanism 300. The sliding mechanism 300 is in contact with the track grooves 201. When the car 100 is removed from the track 200, the sliding mechanism 300 rest inside each of the car parts 100a, 100b.

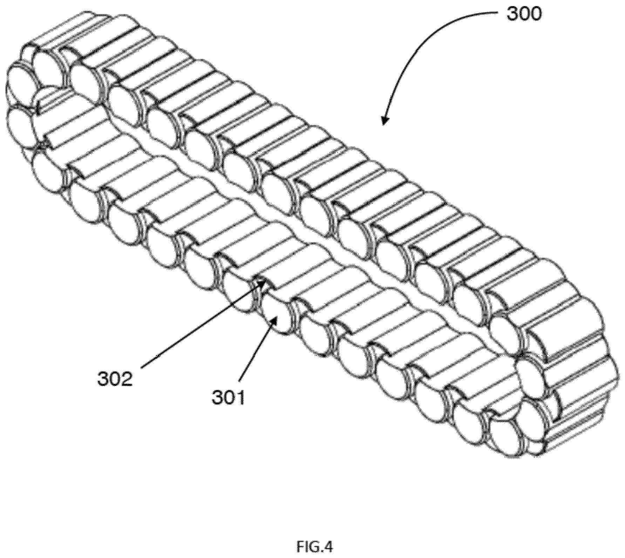

Fig. 4 is a perspective view of a first embodiment of the sliding mechanism according with the invention. As can be shown, the sliding mechanism 300 consists of a plurality of rollers 301 wherein each one is attached to the anterior and posterior roller through a floating cage 302 in such a way that forms a continuous closed loop that is arranged to recirculate inside the cages 100a, 100b of the car 100. Therefore, the sliding mechanism 300 is configured as a continuous belt or chain inside both cages 100a, 100b of the car 100 avoiding the problems with the ball bearings in the prior art. In fact, it is a stronger solution which requires less maintenance.

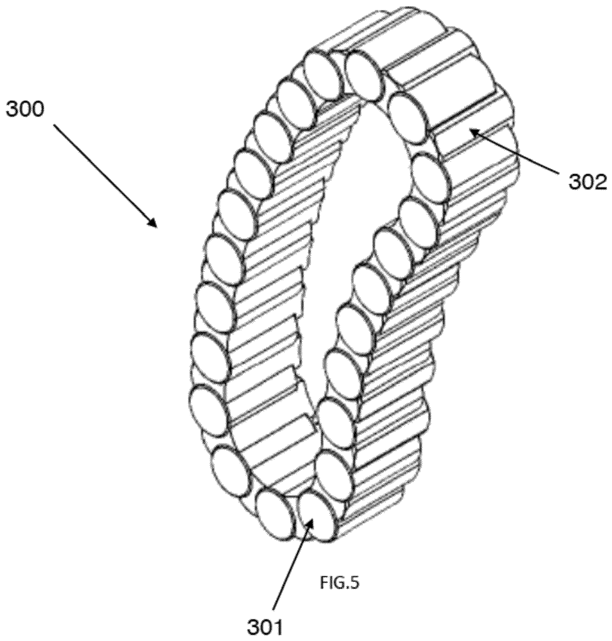

Fig.5 is a second embodiment of the sliding mechanism 300. In this case, it is a nonlinear configuration. One of the main advantages of the invention is that the design can travel on straight or curved, or non-regular geometry paths due to the adaptation of the sliding mechanism 300 (thanks to the "belt" configuration).

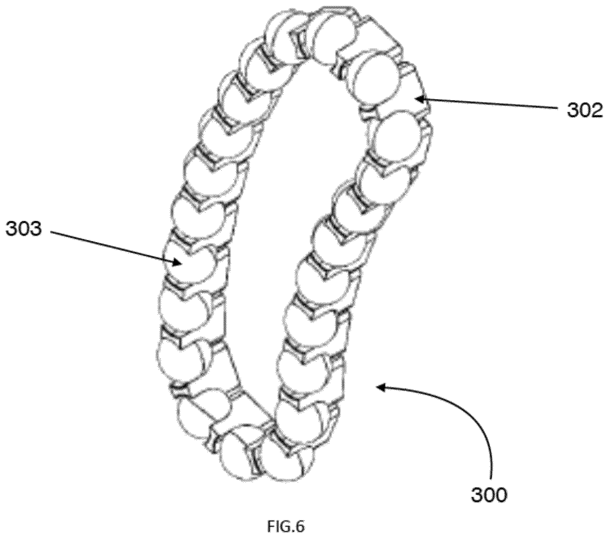

Fig.6 shows a third embodiment of the sliding mechanism 300 in which the rollers 301 has been substituted by balls 303. However, the function of the sliding mechanism 300 is the same that in the above disclosed embodiments.

It should be noted that the track groove 201 can be V-shaped, T-shaped, or L-shaped. In fact, when rollers 301 are used in the sliding mechanism 300, the running surface is preferably flat. Otherwise, when balls 303 or barrels are used, it is preferred a curved surface in the groove 201.

Although the present invention discloses a sliding device as a sailboat traveler, the device can be used in any other application in which a sliding device can be used, e.g., assembling machines including semiconductor manufacturing equipment and so on, numerically controlled machine tools, measuring instruments, testing machines and the like.

In front of the prior art, the advantages of the invention are lower friction (balls 303 or rollers 301 do not hit each other when working because of the floating cages 302). Therefore, the are lower heat energy lost, better efficiency, higher load capacity (it is possible to use a plurality of materials, from plastic to high grade metal or ceramics due to the design). Finally, the design can also be smaller than the designs in the prior art due to high load and efficiency.

## Claims

1. A sliding device comprising:
a track (200) with a groove (201) in each of its sides;
a car (100) slidable along said track (200) comprising a body having side portions (100a, 100b) in opposition to said track grooves (201) and spaced therefrom, each of said side portions (100a,100b) having a sliding race with an open engagement portion and a recirculating return portion, and a comprising a sliding mechanism (300) in the form of a belt circulating around said open engagement portion and said recirculating portion, said sliding mechanism engaged between said race open engagement portion, and said track groove (201);
**characterized in that** the sliding mechanism (300) consists of a plurality of rollers (301) or balls (303) wherein each roller (301) or ball (303) is attached to the anterior and posterior roller (301) or ball (303) through a floating cage (302) in such a way that forms a continuous closed loop that is arranged to recirculate inside the side portions (100a, 100b) of the car (100).

2. The device as claim 1 wherein the groove (201) has a flat running surface in each of its sides.

3. The device as claim 1 wherein the groove (201) has a curved running surface in each of its sides.

4. A device as in any of claims 1 to 3, wherein the sliding device is a sailboat traveler.
